# EUROPÄISCHE PATENTSCHRIFT

(11) **EP 3 103 167 B1**
(45) Veröffentlichungstag und Bekanntmachung des Hinweises auf die Patenterteilung: **25.05.2022**
(21) Anmeldenummer: 15707047.5
(22) Anmeldetag: 03.02.2015
(51) Int. Cl.: H01S 3/23, G02F 1/35, H01S 3/13, H01S 3/067

(54) **OPTISCHE ANORDNUNG MIT STRAHLAUFTEILUNG**
OPTICAL ARRAY COMPRISING A BEAM SPLITTER
ENSEMBLE OPTIQUE À DIVISION DE FAISCEAU

(30) Priorität: 03.02.2014 DE 102014001252
(43) Veröffentlichungstag der Anmeldung: 14.12.2016
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: KLENKE, Arno, 07747 Jena (DE); LIMPERT, Jens, 07751 Jena (DE); OTTO, Hans-Jürgen, 78655 Dunningen (DE); TÜNNERMANN, Andreas, 99425 Weimar (DE)
(74) Vertreter: Schneiders, Josef
(86) Internationale Anmeldenummer: PCT/EP2015/052204
(87) Internationale Veröffentlichungsnummer: WO 2015/114165

(56) Entgegenhaltungen:
- US-A1- 2007 086 010
- US-A1- 2009 245 295
- US-A1- 2013 235 448
- ISHAAYA A A ET AL: "Passive Laser Beam Combining With Intracavity Interferometric Combiners", IEEE JOURNAL OF SELECTED TOPICS IN QUANTUM ELECTRONICS, IEEE SERVICE CENTER, PISCATAWAY, NJ, US, Bd. 15, Nr. 2, 1. März 2009 (2009-03-01), Seiten 301-311, XP011344174, ISSN: 1077-260X, DOI: 10.1109/JSTQE.2008.2010409

## Beschreibung

Die Erfindung betrifft eine optische Anordnung mit
- einem Aufteilungselement, das einen Eingangsstrahl in mindestens zwei Teilstrahlen aufteilt,
- wenigstens einem optischen Element, durch das wenigstens einer der Teilstrahlen propagiert, und
- wenigstens einem Kombinationselement, das die Teilstrahlen in einem Ausgangsstrahl räumlich überlagert.

Derartige optische Anordnungen und Aufteilungselemente können z.B. in Lasersystemen eingesetzt werden.

Die Leistungsfähigkeit von optischen Elementen, z.B. von Laserverstärkern, spektralen Verbreiterungselementen, Transportfasern, Optiken (z.B. Spiegeloberflächen, Substrate, Linsen), usw. ist durch verschiedene physikalische Effekte begrenzt. Dabei ist zwischen der Durchschnittsleistung und der bei gepulsten Systemen wichtigen Pulsspitzenleistung zu unterscheiden. Eine Begrenzung ist auf thermische Effekte zurückzuführen, welche ab einer gewissen Durchschnittsleistung auftreten und von der Geometrie des Elementes sowie äußeren Einflüssen abhängen. Als ein Beispiel für diese Effekte kann bei klassischen Festkörperlasern eine Veränderung des Ausgangsstrahls aufgrund des Auftretens einer thermischen Linse angeführt werden. Bei Faserverstärkern stellt dagegen das Auftreten von Modeninstabilitäten durch thermische Effekte eine Begrenzung der erreichbaren mittleren Ausgangsleistung dar.

Bei hohen Pulsspitzenleistungen treten darüber hinaus nichtlineare Effekte im Medium auf, wie z.B. Selbstphasenmodulation. Diese sorgen für eine räumliche bzw. zeitliche Veränderung der Phase der Laserstrahlung. Im zeitlichen Bereich kann es deshalb zu einer nicht gewünschten Verformung des Pulses kommen, was vor allem bei Pulsen mit hoher Bandbreite zu einer Verringerung der Pulsqualität und Verlängerung der Pulsdauer führt. Im räumlichen Bereich können diese nichtlinearen Effekte zur Selbstfokussierung des Strahls führen, was schnell eine Zerstörung des jeweiligen Mediums hervorrufen kann. Neben der Begrenzung der maximal möglichen Pulsspitzenleistung in Verbindung mit einer gegebenen Pulsform bzw. Pulslänge bewirken nichtlineare Effekte auch eine Begrenzung der maximalen Pulsenergie. Zusätzlich sind Beschädigungen der Oberflächen des Mediums bei hohen Pulsspitzenleistungen oder Pulsenergien möglich, welche ebenfalls eine Begrenzung darstellen können.

In Elementen zur spektralen Verbreiterung werden nichtlineare Effekte ausgenutzt. Auch dort gibt es limitierende physikalische Effekte. Werden als nichtlineare Medien Festkörpermaterialien in Form von Kristallen oder Fasern eingesetzt, dann ist vor allem durch die bereits beschriebene Selbstfokussierung eine Grenze für die Pulsspitzenleistung gegeben. Verwendet man edelgasgefüllte Kapillaren als nichtlineares Medium, sind deutliche höhere Pulsspitzenleistungen möglich, wobei auch diese mit existierenden Lasersystemen bereits erreicht werden. Darüber hinaus kann die hohe Intensität zur Ionisation des Gases führen, was nicht erwünscht ist.

Verschiedene Ansätze zur Überwindung dieser Begrenzungen und zur Steigerung der erreichbaren mittleren Ausgangsleistung sind aus dem Stand der Technik bekannt.

Zum Beispiel existieren Ansätze zur Vermeidung von Limitierungen in Bezug auf die optische Verstärkung und die spektrale Verbreiterung.

Durch Vergrößerung der Strahlfläche ist es möglich, die Leistungsdichte bzw. die Pulsspitzenintensitäten in den verwendeten optischen Elementen zu reduzieren. Ein Beispiel beim Einsatz von faseroptischen Elementen ist die Verwendung von so genannten Large-Mode-Area Fasern. Dies ermöglicht aufgrund der größeren Strahlfläche eine entsprechende Erhöhung der Pulsspitzenleistung ohne nachteilige Auswirkungen.

Durch Verwendung von beispielsweise zirkular polarisierten Pulsen kann die Stärke des Kerr-Effekts herabgesetzt werden, welcher u.a. für das Auftreten der Selbstfokussierung verantwortlich ist.

Durch Manipulation der spektralen Phasen oder Amplituden kann eine Degradation der Pulsqualitat durch nichtlineare Effekte kompensiert werden.

Bei der so genannten Divided Pulse Amplification (DPA) bzw. Divided Pulse Nonlinear Compression (DPNLC) erfolgt eine Aufteilung eines Pulses in mehrere zeitlich getrennte Pulsreplika. Nach der Verstärkung bzw. Verbreiterung der Pulse des Pulszuges erfolgt eine Rekombination in einem Puls. Aufgrund der zeitlichen Aufteilung ist die Pulsspitzenleistung jeder Pulsreplika kleiner als diejenige eines einzelnen Pulses.

Räumlich getrennte Verstärker bzw. Verbreiterungselemente können verwendet werden, wobei eine Aufspaltung des Eingangsstrahls mittels Strahlteilern in mehrere Strahlen erfolgt. Diese werden in mehreren räumlich getrennten, unabhängigen optischen Elementen/Kanälen verstärkt bzw. spektral verbreitert und schließlich wieder in einem Strahl kombiniert. Dabei ist zwischen Kombination von Signalen gleicher oder unterschiedlicher Spektren zu unterscheiden. Bei der spektral gleichen Kombination propagieren in den verschiedenen Kanälen die gleichen spektralen Komponenten, es findet am Strahlteiler nur eine Teilung der Leistung statt. Bei der spektralen Kombination hingegen findet zusätzlich noch eine spektrale Teilung des Eingangssignals statt. Kombinationen beider Verfahren sind möglich. Zusätzlich ist die zeitliche Phasenlage der einzelnen Strahlen von fundamentaler Bedeutung, welche im sub-Wellenlängenbereich übereinstimmen muss. In einigen Fällen kann aufgrund des Aufbaus gewährleistet werden, dass diese Bedingung durchgehend erfüllt ist. Ansonsten kann eine aktive Stabilisierung der Phasenlagen nötig sein. Darüber hinaus muss im gepulsten Betrieb der möglichst genaue zeitliche Überlapp der einzelnen Pulse bei der Kombination gewährleistet werden. Eine Abweichung führt zu einer Verringerung der Kombinationseffizienz. Bei der spektral gleichen Kombination ist es zusätzlich erforderlich, dass die einzelnen Pulse in den Kanälen selbst möglichst identische Phasen- bzw. Amplitudenprofile aufweisen. Abweichungen können hier ebenfalls zu einer Verringerung der Kombinationseffizienz führen. Eine solche optische Anordnung gemäß dem Oberbegriff des Anspruchs 1 ist beispielsweise aus US2013/0235448 A1 bekannt geworden.

Es sind verschiedene Ansätze für Komponenten zur Strahlaufteilung und Kombination zur räumlich getrennten Verstärkung bekannt.

Zum Beispiel können Strahlen mit Hilfe von 1:2-Strahlteilern aufgeteilt und kombiniert werden.

Ein 1:2-Strahlteiler kann mit Hilfe eines polarisationsabhängigen Strahlteilers bzw. einer teilreflektiven Oberfläche realisiert werden. Durch Kaskadierung ist mit mehreren dieser Strahlteiler eine 1:N Teilung realisierbar. Die Erzeugung von N Teilstrahlen ist damit möglich. Das gleiche Prinzip kann auch für die Kombination, d.h. die Überlagerung mehrerer Teilstrahlen in einem Ausgangsstrahl verwendet werden. Nachteilig ist, dass die Skalierbarkeit der Anzahl der Kanäle durch die Menge der notwendigen Elemente (1:2-Strahlteiler) erschwert wird. So sind zum Beispiel für einen 1:32 Strahlteiler 31 1:2-Strahlteiler nötig.

Ein 1:N Strahlteiler, der als ein monolithisches Element ausgebildet ist beispielsweise aus der US 2009/0245295 A1 bekannt geworden. Darin wird der Strahlteiler innerhalb eines Laserresonators eingesetzt und führt zu einem konstanten Weglängenunterschied zwischen je zwei benachbarten Teilstrahlen.

Ein 1:N-Strahlteiler lässt sich alternativ als ein monolithisches diffraktives Element realisieren. Allerdings weisen die einzelnen Teilstrahlen eine Winkeldispersion auf, die für die verschiedenen Strahlen nicht identisch ist. Die unterschiedliche Winkeldispersion muss bei der Verwendung von ultrakurzen Pulsen durch jeweils angepasste Ausgleichselemente beseitigt werden. Dies kann ebenfalls zu einer hohen Anzahl von nötigen Elementen führen und die Skalierung zu einer hohen Kanalzahl erschweren. Dieser Ansatz ist somit ebenfalls sehr aufwendig.

Aufgabe der Erfindung ist es, eine verbesserte optische Anordnung bereit zu stellen, die eine effektive und einfache Aufteilung eines Lichtstrahls, insbesondere eines Laserstrahls mit gepulster oder kontinuierlicher Strahlung, ermöglicht.

Diese Aufgabe löst die Erfindung ausgehend von einer optischen Anordnung der eingangs genannten Art dadurch, dass das Aufteilungselement und das Kombinationselement jeweils ein teilreflektives Element aufweisen, das die Strahlung des Eingangsstrahls bzw. des Ausgangsstrahls zwei- oder mehrfach reflektiert, wobei das teilreflektive Element Zonen unterschiedlicher Reflektivität aufweist, wobei die Reflektivität der Zonen entlang einer in der Reflektionsebene der Strahlung liegenden Richtung ab- bzw. zunimmt, wobei das Aufteilungselement und das Kombinationselement weiterhin jeweils ein reflektives Element aufweisen, wobei die Strahlung zwischen teilreflektivem Element und reflektivem Element mehrfach hin und her reflektiert wird, wobei das Aufteilungselement und das Kombinationselement einen gleichen Aufbau haben, wobei das Kombinationselement in der Weise antisymmetrisch zu dem Aufteilungselement angeordnet ist, dass sich Weglängenunterschiede der Teilstrahlen aufheben.

Durch die Erfindung wird eine kompakte Anordnung zur Überwindung der oben beschriebenen Begrenzungen bereitgestellt. Es erfolgt eine Aufteilung des Eingangsstrahls in mehrere Teilstrahlen, so dass anstelle eines einzelnen optischen Elementes, welches die beschriebenen Begrenzungen zeigt, mehrere Kanäle für die zu propagierende Strahlung verwendet werden können. Diese sind in einer Konfiguration angeordnet, in der die optische und thermische Kopplung der Kanäle gering oder sogar vernachlässigbar klein ist, sie also unabhängig sind.

Gemäß einer möglichen Ausgestaltung sind zwei oder mehr räumlich voneinander getrennte optische Elemente vorgesehen, wobei durch jedes der optischen Elemente jeweils einer der Teilstrahlen propagiert. Handelt es sich z.B. um einen Laserverstärker, so können mehrere Verstärker räumlich getrennt angeordnet werden, wobei durch jedes Verstärkermedium jeweils einer der Teilstrahlen propagiert.

In einer anderen möglichen Ausführungsform sind mehrere optische Elemente zu einem einzelnen monolithischen optischen Element (Multikanalelement) integriert. Die Teilstrahlen propagieren räumlich voneinander getrennt durch das optische Element. Bei einem Laserverstärker kann die Führung der Pumpstrahlung in den jeweiligen Kanälen, in mehreren getrennten Pumpkanälen oder in einem gemeinsamen Pumpkanal erfolgen.

Gemäß der Erfindung wird der Eingangsstrahl mit Hilfe eines kompakten Aufteilungselementes aufgeteilt. Danach propagieren die Teilstrahlen in den einzelnen Kanälen und werden schließlich mit Hilfe des Kombinationselementes wieder in dem Ausgangsstrahl kombiniert.

Aufgrund der Unabhängigkeit der einzelnen Kanäle gelten für jeden der Kanäle einzeln die oben genannten Begrenzungen. Die Erfindung ermöglicht eine quasi beliebige Skalierung bei denkbar geringem Aufwand. Bei N Kanälen ist eine Skalierung der Durchschnittsleistung und Pulsspitzenleistung um denselben Faktor N möglich.

Durch die Erfindung wird eine optische Anordnung mit einem kompakten und winkeldispersionsfreien Aufteilungs- und Kombinationselement zur Aufteilung bzw. Kombination der Strahlung vorgeschlagen. Aufgrund dieser Eigenschaften ist die optische Anordnung besonders für den Einsatz in Verbindung mit ultrakurzen Laserpulsen geeignet.

Erfindungsgemäß weisen das Aufteilungselement und das Kombinationselement jeweils ein teilreflektives Element auf, das die Strahlung des Eingangsstrahls bzw. des Ausgangsstrahls zwei- oder mehrfach reflektiert, wobei das teilreflektive Element Zonen unterschiedlicher Reflektivität aufweist. Die Strahlung des Eingangsstrahls bzw. des Ausgangsstrahls wird, mit anderen Worten, nacheinander an den verschiedenen Zonen des teilreflektiven Elementes, d.h. bei jedem Teilreflektionsvorgang mit einer anderen Reflektivität, reflektiert. Dabei wird z.B. die Reflektivität der Zonen des teilreflektiven Elementes entlang einer in der Reflektionsebene der Strahlung liegenden Richtung kleiner bzw. größer, je nachdem ob es sich um das Aufteilungs- oder das Kombinationselement handelt. Die unterschiedliche (abnehmende bzw. ansteigende) Reflektivität bewirkt, dass, z.B. im Aufteilungselement, jeder Teilstrahl, der bei einem der nacheinander erfolgenden Teilreflektionsvorgänge als nicht reflektierter Anteil des Eingangsstrahls erzeugt wird, eine bestimmte, vorzugsweise gleiche Intensität erhält.

Erfindungsgemäß weisen das Aufteilungselement und das Kombinationselement weiterhin jeweils ein reflektives Element auf, wobei die Strahlung dann zwischen teilreflektivem und reflektivem Element mehrfach hin und her reflektiert wird. Dabei kann die Oberfläche des reflektiven Elementes planparallel zu der Oberfläche des teilreflektiven Elementes sein. Zweckmäßig fällt die Strahlung schräg, d.h. unter einem von 90° abweichenden Winkel auf das teilreflektive Element ein, so dass die Teilstrahlen nach der Aufteilung in einer gemeinsamen Ebene, parallel und mit äquidistantem Abstand propagieren. Dabei ist der Einfallswinkel so zu wählen, dass die Strahlung nacheinander an den Zonen unterschiedlicher Reflektivität teilreflektiert wird.

Bevorzugt ist bei der erfindungsgemäßen optischen Anordnung in Strahlrichtung vor oder hinter dem optischen Element ein Phasenanpassungselement vorgesehen, das die Phase der Strahlung wenigstens eines Teilstrahls beeinflusst. Durch geeignete Phasenanpassungselemente können in den einzelnen Kanälen auftretende, jeweils unterschiedliche Phasenverschiebungen ausgeglichen werden, um eine phasenrichtige Überlagerung der Teilstrahlen im Ausgangsstrahl zu ermöglichen. Dabei kann ein Regelkreis vorgesehen sein, in dem die Phase der Strahlung des wenigstens einen Teilstrahls Stellgröße ist. Eigenschaften des Ausgangsstrahls (z.B. Durchschnittsleistung, Pulsspitzenleistung), die geeignet detektiert werden, können Regelgröße sein. Auf diese Weise können Phasenverschiebungen in den einzelnen Kanälen automatisch ausgeglichen werden.

Die zu Grunde liegende Aufgabe wird erfindungsgemäß auch durch ein System gemäß Anspruch 11 gelöst, das eine Laserstrahlungsquelle, die den Eingangsstrahl emittiert, und eine optischen Anordnung gemäß Anspruch 1 aufweist.

Beispielsweise kann die Laserstrahlungsquelle des erfindungsgemäßen Systems ein Dauerstrichlaser sein, wobei die Leistung der Laserstrahlung des Dauerstrichlasers in jedem Teilstrahl durch optische Verstärkung auf mindestens 100 W, vorzugsweise auf mindestens 500 W, höchst vorzugsweise auf mindestens 1 kW verstärkt wird. Dabei wird die Dauerstrichstrahlung durch das Aufteilungselement in mehrere Teilstrahlen aufgeteilt. Dann werden die Teilstrahlen in den Kernen einer mit beispielsweise Erbium oder Ytterbium dotierten, optisch gepumpten Multikernfaser als optisches Element im Sinne der Erfindung verstärkt und schließlich durch das Kombinationselement wieder kombiniert. Als Leistungsbereich kann hierbei eine Ausgangsleistung von 1 kW pro Kern der Multikernfaser angenommen werden. Dies führt nach der Kombination der Teilstrahlen im optimalen Fall zu einer Ausgangsleistung des Systems von N mal 1 kW (N: Anzahl der Kerne der Multikernfaser).

Alternativ kann die Laserstrahlungsquelle des erfindungsgemäßen Systems ein Kurzpulslaser sein, der Laserpulse mit einer Pulsdauer von weniger als 1 ps (z.B. im Bereich von 100 fs) emittiert. Die Pulsenergie der Laserpulse am Ausgang des wenigstens einen optischen Elementes kann dabei in jedem Teilstrahl mindestens 0,1 mJ, vorzugsweise mindestens 0,5 mJ, höchst vorzugsweise mindestens 1 mJ betragen.

Z.B. eignet sich das System in dieser Ausgestaltung zur Verstärkung von zeitlich gestreckten Femtosekundenpulsen. Dabei kann als optisches Element wiederum eine optisch gepumpte, dotierte Multikernfaser (die z.B. mit Erbium oder Ytterbium dotiert ist) mit mehreren Signalkernen zum Einsatz kommen, wobei die Laserpulse durch das erfindungsgemäße Aufteilungslement aufgeteilt und wieder kombiniert werden. Z.B. können Laserpulse mit einer gestreckten Pulsdauer von 1 ns in jedem Kern auf 1 mJ Pulsenergie verstärkt werden, was nach der Kombination eine Pulsenergie von bis zu N mal 1 mJ ergibt. Zur zeitlichen Streckung (im Eingangsstrahl) und ggf. Kompression (im Ausgangsstrahl) kann das erfindungsgemäße System geeignete dispersive Elemente (z.B. Prismen- oder Gitteranordnungen) aufweisen.

Ebenso eignet sich das erfindungsgemäße System zur spektralen Verbreiterung von Femtosekundenpulsen z.B. in einem optischen Element in Form einer Hohlkernfaser mit mehreren Kernen. Es findet in jedem Kern getrennt eine spektrale Verbreiterung (z.B. von 20 nm Bandbreite auf 100 nm Bandbreite) statt. Dabei erfolgt eine Aufteilung und Kombination mit der erfindungsgemäßen optischen Anordnung. So können z.B. Laserpulse mit einer Pulsenergie von 1 mJ und einer Pulsdauer von 200 fs (pro Kern) spektral verbreitert werden. Die kombinierte Pulsenergie von N mal 1 mJ würde mit einem einzelnen Kern jedoch aufgrund von Ionisation nicht erreicht werden können. Mit der erfindungsgemäßen optischen Anordnung (Aufteilung, Multikern-Hohlkernfaser, Kombination) ist dies jedoch ohne Ionisation möglich.

Ausführungsbeispiele der Erfindung werden im Folgenden anhand der Zeichnungen erläutert. Es zeigen:
- Figur 1: eine schematische Darstellung eines hier beschriebenen optischen Aufteilungselementes;
- Figur 2: schematische Darstellung einer erfindungsgemäßen optischen Anordnung mit mehreren separaten optischen Elementen;
- Figur 3: erfindungsgemäße optische Anordnung mit monolithischem optischem Element;
- Figur 4: erfindungsgemäße optische Anordnung mit Phasenanpassungselement.

Das in den Figuren gezeigte Aufteilungselement 1 umfasst zwei Elemente, nämlich ein teilreflektives Element 2 und ein reflektives Element 3. Bei dem reflektiven Element 3 handelt es sich um einen Spiegel mit möglichst hoher Reflektivitat. Das teilreflektive Element 2 reflektiert einen Teil der (z.B. von einem Pulslaser) einfallenden Strahlung E. Der nicht reflektierte Teil wird transmittiert und erzeugt einen Teilstrahl. Das teilreflektive Element 2 besteht aus N (in den dargestellten Ausführungsbeispielen gilt N=4) Zonen a, b, c, d mit unterschiedlicher Reflektivität. Diese können jeweils für die Teilstrahlen T1 bis TN gewählt werden. Die Strahlen nehmen den in den Figuren dargestellten Weg. Der Eingangsstrahl E wird zwischen dem teilreflektiven Element 2 und dem dazu gegenüberliegend mit Abstand angeordneten, planparallelen reflektiven Element 3 mehrfach hin und her reflektiert. Die Reflektivitäten der Zonen a, b, c, d des teilreflektiven Elementes 2 sind so gewählt, dass der einfallende Eingangsstrahl E in einem bestimmten Verhältnis auf die N Teilstrahlen aufgeteilt wird. Für die Aufteilung des Eingangsstrahls E in gleiche Teile auf alle Teilstrahlen sind z.B. (bei N=4) die Reflektivitäten Rₐ, R_{b}, R_{c}, R_{d} der Zonen a, b, c, d wie folgt zu wählen: Rₐ=75%, R_{b=}66%, R_{c}=50%, Rd=0%. Die erzeugten Teilstrahlen T1 bis T4 sind hierbei parallel und äquidistant. Dies kann bei einer anderen Anordnung von teilreflektivem Element 2 und reflektivem Element 3 bzw. bei einem anderen Design dieser Elemente anders sein.

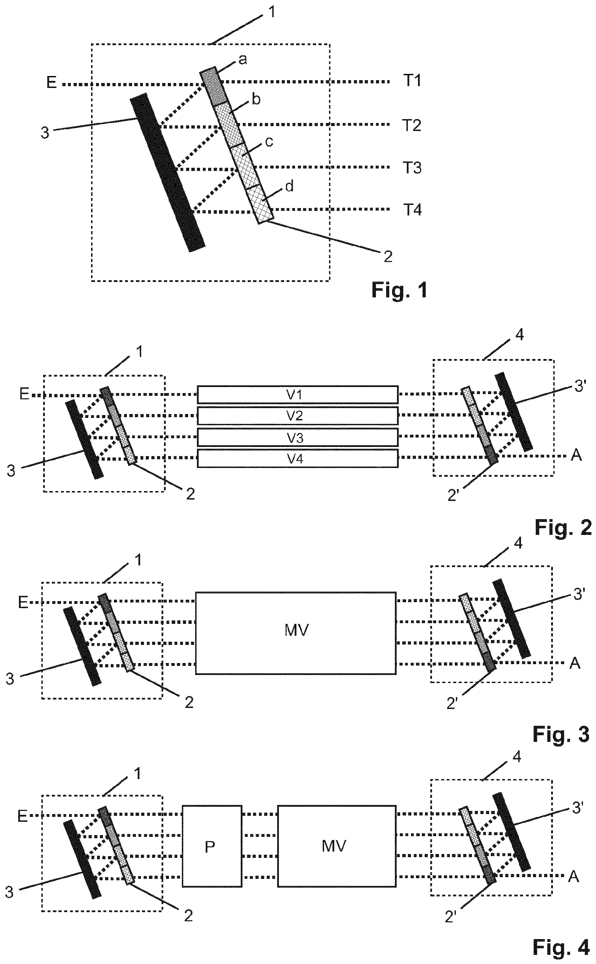

Bei den Anordnungen der Figuren 2 bis 4 ist jeweils ein Aufteilungslement 1 gemäß Figur 1 sowie ein Kombinationselement 4 vorgesehen, das einen gleichen Aufbau mit teilreflektivem Element 2' und reflektivem Element 3' hat. Das Kombinationselement 4 überlagert die Teilstrahlen T1 bis TN in einem Ausgangsstrahl A. Dabei ist es in der Weise antisymmetrisch zu dem Aufteilungselement 1 angeordnet, dass sich die entstehenden Weglängenunterschiede der N Teilstrahlen T1 bis TN genau aufheben. Aufgrund der Integration der 1:N Teilung bzw. Kombination in jeweils einem einzelnen Element 1 bzw. 4 ist eine kompakte Bauweise möglich, und es wird eine einfache Justage gewährleistet. Außerdem existiert keine Winkelabhängigkeit der Teilstrahlen T1 bis TN von der Wellenlänge. Das Element eignet sich also auch für spektral breitbandige Strahlung und damit zur Verwendung für ultrakurze Laserpulse.

In dem Ausführungsbeispiel der Figur 2 sind N räumlich getrennte optische Elemente V1 bis VN vorgesehen. Der Eingangsstrahl E wird mit Hilfe des Aufteilungselementes 1 in N Teilstrahlen aufgeteilt, die jeweils in den entsprechenden Kanälen der optischen Elemente V1 bis VN propagieren. Als Beispiel können die optischen Elemente V1 bis VN einzelne Faserverstärker (z.B. optisch gepumpte, mit Seltenerdionen dotierte optische Fasern) sein. Nach der Propagation durch die optischen Elemente V1 bis VN werden die N Teilstrahlen im Kombinationselement 4 zum Ausgangsstrahl A kombiniert.

In dem Ausführungsbeispiel der Figur 3 wird der ankommende Eingangsstrahl E mit Hilfe des Aufteilungselementes 1 wiederum in N Teilstrahlen aufgeteilt, die jeweils in den entsprechenden Kanälen eines monolithischen Multikanalelementes MV als optisches Element propagieren. Das optische Element MV kann z.B. eine Multikernfaser sein, oder ein volumenoptischer Verstärker. Nach der Propagation durch das optische Element MV werden die N Teilstrahlen im Kombinationselement 4 zum Ausgangsstrahl A kombiniert.

Figur 4 zeigt ein Ausführungsbeispiel mit zusätzlichem Phasenanpassungselement P. Dieses dient zum Ausgleich von Phasendifferenzen der einzelnen Teilstrahlen, so dass bei der Kombination im Kombinationselement 4 die Phasendifferenz minimiert wird und die Ausgangsleistung des kombinierten Strahls A maximiert wird. Die Steuerung des Phasenanpassungselementes P kann manuell oder als Teil einer aktiven Regelung zur Stabilisierung der Ausgangsleistung erfolgen. Das Phasenanpassungselement P kann mechanisch bewegbare Elemente umfassen, wie z.B. per Piezoantrieb verschiebbare Spiegel oder bewegbare Transmissionskeile. Ebenso sind akustooptische oder elektrooptische Modulatoren (AOM bzw. EOM) verwendbar. Diese können auch in das optische Elemente MV integriert sein.

Entsprechende Phasenanpassungselemente können auch bei der Lösung gemäß Figur 2 in den einzelnen Kanälen vorgesehen sein.

Bei Verwendung eines monolithischen Multikanalelementes MV gemäß den Figuren 3 und 4 ist es in vielen Fällen möglich, nur mit Hilfe von statischen Phasenschiebern eine effiziente und zeitlich stabile Rekombination des Strahls zu gewährleisten, da sich äußere Einflüsse, z.B. thermische Veränderungen und mechanische Schwingungen, auf alle Kanäle im Idealfall identisch auswirken und so die relativen Phasenlagen der Teilstrahlen erhalten bleiben.

## Patentansprüche

1. Optische Anordnung mit
- einem Aufteilungselement (1), das einen Eingangsstrahl (E) in mindestens zwei Teilstrahlen (T1, T2, T3, T4) aufteilt,
- wenigstens einem optischen Element (V1, V2, V3, V4, MV), durch das wenigstens einer der Teilstrahlen (T1, T2, T3, T4) propagiert, wobei das wenigstens eine optische Element (V1, V2, V3, V4, MV) ein optischer Verstärker oder ein nichtlineares optisches Element zur spektralen Verbreiterung ist, und
- wenigstens einem Kombinationselement (4), das die Teilstrahlen (T1, T2, T3, T4) in einem Ausgangsstrahl (A) räumlich überlagert,
wobei das Aufteilungselement (1) und das Kombinationselement (4) jeweils ein teilreflektives Element (2, 2') aufweisen,
**dadurch gekennzeichnet,**
**dass** das teilreflektive Element (2, 2`) die Strahlung des Eingangsstrahls (E) bzw. des Ausgangsstrahls (A) zwei- oder mehrfach reflektiert, wobei das teilreflektive Element (2, 2') Zonen (a, b, c, d) unterschiedlicher Reflektivität aufweist, wobei die Reflektivität der Zonen (a, b, c, d) entlang einer in der Reflektionsebene der Strahlung liegenden Richtung ab- bzw. zunimmt, wobei das Aufteilungselement (1) und das Kombinationselement (4) weiterhin jeweils ein reflektives Element (3, 3') aufweisen, wobei die Strahlung zwischen teilreflektivem Element (2, 2') und reflektivem Element (3, 3') mehrfach hin und her reflektiert wird,
wobei das Aufteilungselement (1) und das Kombinationselement (4) einen gleichen Aufbau haben, und
wobei das Kombinationselement (4) in der Weise antisymmetrisch zu dem Aufteilungselement (1) angeordnet ist, dass sich Weglängenunterschiede der Teilstrahlen (T1, T2, T3, T4) aufheben.

2. Optische Anordnung nach Anspruch 1, **dadurch gekennzeichnet, dass** die Oberfläche des reflektiven Elementes (2, 2') planparallel zu der Oberfläche des teilreflektiven Elementes (3, 3') ist.

3. Optische Anordnung nach Anspruch 1 oder 2, **dadurch gekennzeichnet, dass** die Strahlung schräg, d.h. unter einem von 90° abweichenden Winkel auf das teilreflektive Element (2, 2') einfällt.

4. Optische Anordnung nach einem der Ansprüche 1 bis 3, **dadurch gekennzeichnet, dass** die Teilstrahlen (T1, T2, T3, T4) in einer gemeinsamen Ebene, parallel und mit äquidistantem Abstand propagieren.

5. Optische Anordnung nach einem der Ansprüche 1 bis 4, **dadurch gekennzeichnet, dass** die Teilstrahlen (T1, T2, T3, T4) räumlich voneinander getrennt durch das optische Element (MV) propagieren.

6. Optische Anordnung nach Anspruch 5, **dadurch gekennzeichnet, dass** das optische Element (MV) eine Mehrkernfaser mit mehreren räumlich voneinander getrennten Wellenleiterstrukturen ist, die jeweils einen der Teilstrahlen (T1, T2, T3, T4) führen.

7. Optische Anordnung nach einem der Ansprüche 1 bis 4, **gekennzeichnet durch** zwei oder mehr räumlich voneinander getrennte optische Elemente (V1, V2, V3, V4), wobei durch jedes der optischen Elemente (V1, V2, V3, V4) jeweils einer der Teilstrahlen (T1, T2, T3, T4) propagiert.

8. Optische Anordnung nach Anspruch 7, **dadurch gekennzeichnet, dass** die optischen Elemente (V1, V2, V3, V4) optische Fasern sind, wobei jede der Fasern jeweils einen der Teilstrahlen führt.

9. Optische Anordnung nach einem der Ansprüche 1 bis 8, **gekennzeichnet durch** wenigstens ein in Strahlrichtung vor oder hinter dem optischen Element (V1, V2, V3, V4, MV) angeordnetes Phasenanpassungselement (P), das die Phase der Strahlung wenigstens eines Teilstrahls (T1, T2, T3, T4) beeinflusst.

10. Optische Anordnung nach Anspruch 9, **gekennzeichnet durch** einen Regelkreis, in dem die Phase der Strahlung des wenigstens einen Teilstrahls (T1, T2, T3, T4) Stellgröße ist.

11. System umfassend:
eine Laserstrahlungsquelle, die den Eingangsstrahl (E) emittiert, und
eine optischen Anordnung nach Anspruch 1.

12. System nach Anspruch 11, **dadurch gekennzeichnet, dass** die Laserstrahlungsquelle ein Dauerstrichlaser ist, wobei die Leistung der Laserstrahlung des Dauerstrichlasers in jedem Teilstrahl (T1, T2, T3, T4) durch optische Verstärkung auf mindestens 100 W, vorzugsweise auf mindestens 500 W, höchst vorzugsweise auf mindestens 1 kW verstärkt wird.

13. System nach Anspruch 11, **dadurch gekennzeichnet, dass** die Laserstrahlungsquelle ein Kurzpulslaser ist, wobei die Pulsenergie der Laserpulse am Ausgang des wenigstens einen optischen Elementes (MV, V1, V2, V3, V4) in jedem Teilstrahl (T1, T2, T3, T4) mindestens 0,1 mJ, vorzugsweise mindestens 0,5 mJ, höchst vorzugsweise mindestens 1 mJ beträgt.

## Claims

1. Optical assembly, comprising
- a splitting member (1) splitting an input beam (E) into at least two partial beams (T1, T2, T3, T4),
- at least one optical member (V1, V2, V3, V4, MV) through which at least one of the partial beams (T1, T2, T3, T4) propagates, wherein the at least one optical member (V1, V2, V3, V4, MV) is an optical amplifier or a non-linear optical member for spectral broadening, and
- at least one combination member (4) which spatially overlaps the partial beams (T1, T2, T3, T4) in an output beam (A), wherein the splitting member (1) and the combination member (4) each comprise a partially reflective member (2, 2'),
**characterized in that**
the partially reflective member (2, 2') reflects the radiation of the input beam (E) or the output beam (A) two or multiple times, wherein the partially reflective member (2, 2') comprises zones (a, b, c, d) of different reflectivity, wherein the reflectivity of the zones (a, b, c, d) decreases or increases in a direction located within the reflective plane of the radiation, wherein the splitting member (1) and the combination member (4) each further comprise a reflective member (3, 3'), respectively, wherein the radiation is reflected back and forth multiple times between the partially reflective member (2, 2') and the reflective member (3, 3'), wherein the splitting member (1) and the combination member (4) have a same setup, and wherein the combination member (4) is arranged anti-symmetrically to the splitting member (1) in such a way that optical path length differences of the partial beams (T1, T2, T3, T4) cancel each other out.

2. Optical assembly according to claim 1, **characterized in that** the surface of the reflective member (2, 2') is plane-parallel to the surface of the partially reflective member (3, 3').

3. Optical assembly according to claim 1 or 2, **characterized in that** the radiation is obliquely incident, i.e. incident on the partially reflective member (2, 2') in an angle deviating from 90°.

4. Optical assembly according to any one of claims 1 to 3, **characterized in that** the partial beams (T1, T2, T3, T4) propagate in a common plane, in parallel, and equidistantly.

5. Optical assembly according to any one of claims 1 to 4, **characterized in that** the partial beams (T1, T2, T3, T4) propagate through the optical member (MV) spatially separated from each other.

6. Optical assembly according to claim 5, **characterized in that** the optical member (MV) is a multicore fiber with multiple waveguide structures spatially separated from each other, which each guide one of the partial beams (T1, T2, T3, T4).

7. Optical assembly according to any one of claims 1 to 4, **characterized by** two or more optical members (V1, V2, V3, V4) which are spatially separated from each other, wherein in each case one of the partial beams (T1, T2, T3, T4) propagates through each of the optical members (V1, V2, V3, V4).

8. Optical assembly according to claim 7, **characterized in that** the optical members (V1, V2, V3, V4) are optical fibers, wherein each of the fibers guides one of the partial beams, respectively.

9. Optical assembly according to any one of claims 1 to 8, **characterized by** at least one phase matching member (P) arranged in front of or behind the optical element (V1, V2, V3, V4, MV) in the beam direction, which influences on the phase of the radiation of at least one partial beam (T1, T2, T3, T4).

10. Optical assembly according to claim 9, **characterized by** a closed loop circuit, in which the phase of the radiation of the at least one partial beam (T1, T2, T3, T4) is the manipulated variable.

11. System, comprising:
a laser radiation source emitting the input beam (E), and
an optical assembly according to claim 1.

12. System according to claim 11, **characterized in that** the laser radiation source is a continuous wave laser, wherein the power of the laser radiation of the continuous wave laser is amplified to at least 100 W in each partial beam (T1, T2, T3, T4) through optical amplification, preferably to at least 500 W, most preferably to at least 1 kW.

13. System according to claim 11, **characterized in that** the laser radiation source is a short pulse laser, wherein the pulse energy of the laser pulses at the outlet of the at least one optical member (MV, V1, V2, V3, V4) in each partial beam (T1, T2, T3, T4) is at least 0,1 mJ, preferably at least 0,5 mJ, most preferably at least 1 mJ.

## Revendications

1. Ensemble optique avec
- un élément de division (1), qui divise un faisceau entrant (E) en au moins deux faisceaux partiels (T1, T2, T3, T4),
- au moins un élément optique (V1, V2, V3, V4, MV), par lequel au moins un des faisceaux partiels (T1, T2, T3, T4) se propage, dans lequel l'au moins un élément optique (V1, V2, V3, V4, MV) est un amplificateur optique ou un élément optique non linéaire pour l'élargissement spectral, et
- au moins un élément de combinaison (4), qui superpose spatialement les faisceaux partiels (T1, T2, T3, T4) dans un faisceau sortant (A), dans lequel l'élément de division (1) et l'élément de combinaison (4) présentent respectivement un élément en partie réfléchissant (2, 2'),
**caractérisé en ce que**
l'élément en partie réfléchissant (2, 2') réfléchit à deux reprises ou à maintes reprises le rayonnement du faisceau entrant (E) ou du faisceau sortant (A), dans lequel l'élément en partie réfléchissant (2, 2') présente des zones (a, b, c, d) à réflectivité différente, dans lequel la réflectivité des zones (a, b, c, d) baisse ou augmente le long d'une direction se situant dans le plan de réflexion du rayonnement, dans lequel l'élément de division (1) et l'élément de combinaison (4) présentent par ailleurs respectivement un élément réfléchissant (3, 3'), dans lequel le rayonnement est réfléchi à maintes reprises en va-et-vient entre un élément en partie réfléchissant (2, 2') et un élément réfléchissant (3, 3'), dans lequel l'élément de division (1) et l'élément de combinaison (4) ont une structure identique et dans lequel l'élément de combinaison (4) est disposé de manière antisymétrique par rapport à l'élément de division (1) de manière à supprimer des différences de longueurs de chemin des faisceaux partiels (T1, T2, T3, T4).

2. Ensemble optique selon la revendication 1, **caractérisé en ce que** la surface de l'élément réfléchissant (2, 2') est parallèle en plan par rapport à la surface de l'élément en partie réfléchissant (3, 3').

3. Ensemble optique selon la revendication 1 ou 2, **caractérisé en ce que** le rayonnement est incident de manière oblique, en d'autres termes selon un angle divergeant de 90°, sur l'élément en partie réfléchissant (2, 2').

4. Ensemble optique selon l'une quelconque des revendications 1 à 3, **caractérisé en ce que** les faisceaux partiels (T1, T2, T3, T4) se propagent dans un plan commun de manière parallèle et à équidistance.

5. Ensemble optique selon l'une quelconque des revendications 1 à 4, **caractérisé en ce que** les faisceaux partiels (T1, T2, T3, T4) se propagent de manière séparée les uns des autres spatialement à travers l'élément optique (MV).

6. Ensemble optique selon la revendication 5, **caractérisé en ce que** l'élément optique (MV) est une fibre à cœurs multiples avec plusieurs structures guides d'ondes séparées spatialement les unes des autres, qui acheminent respectivement un des faisceaux partiels (T1, T2, T3, T4).

7. Ensemble optique selon l'une quelconque des revendications 1 à 4, **caractérisé par** deux éléments optiques (V1, V2, V3, V4) ou plus séparés spatialement les uns des autres, dans lequel respectivement un des faisceaux partiels (T1, T2, T3, T4) se propage à travers chacun des éléments optiques (V1, V2, V3, V4).

8. Ensemble optique selon la revendication 7, **caractérisé en ce que** les éléments optiques (V1, V2, V3, V4) sont des fibres optiques, dans lequel chacune des fibres achemine respectivement un des faisceaux partiels.

9. Ensemble optique selon l'une quelconque des revendications 1 à 8, **caractérisé par** au moins un élément d'adaptation de phase (P) disposé dans le sens de faisceau devant ou après l'élément optique (V1, V2, V3, V4, MV), qui influence la phase du rayonnement d'au moins un faisceau partiel (T1, T2, T3, T4).

10. Ensemble optique selon la revendication 9, **caractérisé par** un circuit de régulation, dans lequel la phase du rayonnement de l'au moins un faisceau partiel (T1, T2, T3, T4) est une grandeur de réglage.

11. Système comprenant :
une source de rayonnement laser, qui émet le faisceau entrant (E), et
un ensemble optique selon la revendication 1.

12. Système selon la revendication 11, **caractérisé en ce que** la source de rayonnement laser est un laser continu, dans lequel la puissance du rayonnement laser du laser continu dans chaque faisceau partiel (T1, T2, T3, T4) est amplifiée par amplification optique sur au moins 100 W, de préférence sur au moins 500 W, idéalement sur au moins 1 kW.

13. Système selon la revendication 11, **caractérisé en ce que** la source de rayonnement laser est un laser pulsé court, dans lequel l'énergie pulsée des impulsions laser sur la sortie de l'au moins un élément optique (MV, V1, V2, V3, V4) dans chaque faisceau partiel (T1, T2, T3, T4) est d'au moins 0,1 mJ, de préférence d'au moins 0,5 mJ, idéalement d'au moins 1 mJ.
